# EUROPEAN PATENT APPLICATION

(11) **EP 2 832 201 A1**
(43) Date of publication of application: **04.02.2015**
(21) Application number: 14002376.3
(22) Date of filing: 10.07.2014
(51) Int. Cl.: A01C 7/06

(54) **Seeder combined with fertilising apparatus**

(30) Priority: 02.08.2013 IT TV20130127
(71) Applicant: Sfoggia Agriculture Division S.R.L., 31044 Montebelluna (TV) (IT)
(72) Inventor: SFOGGIA AGRICULTURE DIVISION S.R.L., 31044 Montebelluna, (TV) (IT); Sfoggia, Antonio, 31044 Montebelluna (TV) (IT)
(74) Representative: Osti, Biancamaria

(57) **Abstract**

Fertilizer burying system, by means of disc (20) and/or blade (30) mounted on the floating frame of a seeding element provided on a typical precision seeder (10). For specific seeding, said burying system can bury the fertilizer in line with or offset from seeding.

## Description

The present invention has for object a fertilizer burying system, by means of disc and of falchion, which are mounted on the floating frame of a seeding element, posteriorly together with the seed burying system, conventionally provided on a typical precision seeder. In the present case the said system provides for the fixing of at least one fertilizer burying device, by means of disc and of falchion, which, being fixed on the floating frame by parallelogram means, typical of a precision seeder, said burying device by means of disc and of falchion, allows the precision burying of the fertilizer, because, like the seeding element is independent from the movement of the tractor drive wheels or dragging means, not being bound firmly to the cross beam support, which is integral to said wheels. Furthermore, said burying system can be bury the fertilizer, in line of seeding with the seed or offset from it, for specific seeding.

### Field of application

The seeder is an agricultural machine used to plant seeds on a land previously prepared in an appropriate way. This tool is being towed or carried by tractors and produces jointly the seeding furrow, the deposition of the seeds, the closure of the furrow and the partial compaction of the soil around the seed. Often seeders are equipped with tanks and additional distribution system for pesticides or fertilizers in granular form, and sometimes liquid. The first seeder machine was built by Jethro Tull in 1701.

The traditional seeders are characterized by a lack of regularity in the spacing of the seeds, spacing which may not exceed certain values rather limited. Are characterized by systems of regulation of the flow of seeds totally mechanical acting not on the single seed but on volumes of more seeds, systems generally implemented directly by the motion of wheels placed on the ground, in such a way as to have a density of deposition of the seeds as much as possible more uniform also at different motion speeds.

The precision seeders instead have the ability to control the single seed, and they can then implement any spacing in the pose. Are often carried out with pneumatic apparatuses that constantly produce a depression used to make the pick-up of the single seed by metallic rotating surfaces (distributors) fitted with holes much smaller than the typical seed. Depression is applied on one side of the surface, so that on the other side remain "attached" (for depression) one seed for each hole, regardless of the actual shape and size of the seed itself. Releasing the depression, the seeds fall in the distributors to be seeded. In these machines the pneumatic apparatus is implemented by the tractor (through rotary power outlet), while the mechanical movement of the distributors (the speed of which determines the spacing) is implemented by the wheels placed on the ground, in order to have a constant spacing also at different motion speeds.

Note is in fact in the modern agriculture of precision pneumatic planter "mono-germ" that is used for seeding on prepared ground or with minimal processing. The strength and quality of construction, the simplicity and versatility of use, are combined to the reliability of seeding also to an advancement time of 10-12 km/h. The well-known system by double discs with lip wheels ensures a constant seeding depth even in extremely difficult conditions.

The precision seeder can be used to sow corn, soybeans, sugar beet, sunflower, sorghum, sesame, bean, pea, cotton, and other similar types of seeds.

As described in the introductory paragraph of the field of application, the precision seeders are commonly equipped with burying systems of various fertilizers which, however, are not mounted on the parallelogram floating frame typical of the seed burying system, but instead of a transverse support beam, which is integral to the drive wheels of the tractor or dragging means.

The prior art, operating in the aforesaid typical manner of fertilizer burying, presents, therefore, essentially an important limitation in this regard of the constancy of the depth of fertilizer burying, in that the said depth of burying is directly dependent on the position of the motion of the drive wheels of the tractor or dragging means, which raise the said transverse support beam of the device of fertilizer burying, according to the roughness of the terrain, and therefore, this causes a considerable difference in the depth of fertilizer burying.

So what we can say is that certainly it is known today, in the field of precision seeders also mono-germ, equipped with fertilizer burying devices, the arrangement of fertilizer burying devices, which are fixed in such a way that follow the movement of the drive wheels of the tractor or dragging means, instead of the one of the devices burying the seed, causing in such way, a burying of the said fertilizer not optimal, resulting in expenditure of the same.

### State of the art

In the field of the devices, for a precision seeder, provided with devices of fertilizer burying has been conducted a search, which has allowed to identify at least the following anteriority:
D1) CN202818931 (U) LI JIA
D2) CN202857269 (U) BEIJING DEBONT CO LTD
D3) CN202697193 (U) NORTHEAST AGRICULTURAL UNIVERSITY
D4) US2012256391 (A1) INST NAC DE TECNOLOG AGROPECUARIA [AR]
D5) JPH0269102 (A) MITSUBISHI AGRICULT MACH CO LTD

D1 represents an utility model which relates to an agricultural machine, in particular to a joint floating type precision seeder which is provided with a machine body large frame, a fertilizer sowing opener, a seed guide opener and a joint floater. The joint floater is provided with a quadrilateral floating twisting frame, the head of the quadrilateral floating twisting frame is fixedly connected with the machine body large frame through a welded large frame clamping base and a U-shaped bolt, a fertilizer sowing opener installation base and a connecting rod are installed at the tail of the quadrilateral floating twisting frame in welding mode, a seed guide opener installation base is installed at the tail end of the connecting rod in welding mode, the fertilizer sowing opener is installed on the fertilizer sowing opener installation base through rod legs of the fertilizer sowing opener, and the seed guide opener is installed on the seed guide opener installation base through rod legs of the seed guide opener. Compared with an existing similar product, due to joint stable floating of the fertilizer sowing opener and the seed guide opener, the joint floating type precision seeder has good adaptability to cultivated land surface status and simultaneously guarantees interval values of a sowed fertilizer layer and a sowed seed layer to be constant values (or fluctuate within a minimum range) so as to ensure optimal fertilizer and seed sowing effect.

D2 represents an utility model which relates to a radar measurement and control precision seeder comprising a rack, wherein the rack is provided with a seed box and a fertilizer box; a precision seeding device is mounted below the seed box and a ditching fertilizer apparatus is mounted below the fertilizer box; an earth covering and pressing device is mounted behind the rack; the rack is further provided with a speed measurement radar, a controller, an adjustable proportion valve, a hydraulic motor and a seeding driving shaft, which are connected in sequence; and the seeding driving shaft is connected with the precision seeding device. According to the radar measurement and control precision seeder disclosed by the utility model, speed monitoring is carried out through the radar and the hydraulic motor is used for driving and seeding, so that the seeding amount can reach a pre-set requirement; and the radar measurement and control precision seeder has the characteristics of high automation degree, accurate regulation and control of the seeding amount and the like.

D3 represents an utility model which relates to a large-ridge close planting straw clearing layered fertilization no-tillage precision seeding monomer and belongs to agricultural machinery. The monomer comprises a combined monomer machine frame, a connecting rod frame, a fertilizer box, a layered fertilizer applicator, a seed box, a seed furrow opener, a precision seeder, a land wheel, a disc soil covering device and a press roller, wherein the connecting rod frame, the fertilizer box, the layered fertilizer applicator, the seed box, the seed furrow opener, the precision seeder, the land wheel, the disc soil covering device and the press roller are assembled on the combined monomer machine frame, double-shaft rigid-tooth type straw clearing and straw covering assemblies are assembled on the lower part of the front side of the combined monomer machine frame and in a position positioned in front of the layered fertilizer applicator, and a universal transmission shaft is connected with the double-shaft rigid-tooth type straw clearing and straw covering assemblies through a chain transmission mechanism. The monomer has the advantages that the structure is reasonable, the operation quality is good, the operation efficiency is high, the operation is reliable, the application range is wide, the general-purpose degree is high, and the monomer particularly meets and adapts to the requirement of a large-ridge close planting maize stubble land no-tillage fertilization seeding agricultural operation method.

D4 represents a load transfer device for seed and fertilizer distribution systems in seeders and fertilizers improving adaptation of seed distribution systems to the different ground irregularities, comprising a deformable parallelogram-shaped structure attached to such seeder and fertilizer machine tool-holder bar at one end and to the distribution system at the other end; a transfer rack that articulates in one of the parallelogram vertexes acting as a rocker arm connected at one end to the aforementioned parallelogram and at the other end to at least one spring through a lever arm; wherein such lever arm extends downwardly and divergently, generating a crossing angle between the parallelogram lower and upper sides, creating a torque that varies not only for the spring tension but also for the ratio of the lever arms effective lengths involved. The system is installed in seed and fertilizer distribution systems, to improve movement along the ground.

D5 represents the application of a fertilizer at a desired position and obtain excellent fertilizer effects by carrying out ridging in a vegetational part through intertillage earthing up and simultaneously applying the fertilizer into a ridged part. Interrow soil of crops is subjected to intertillage earthing up action with intertillage by a colter and earthing up action by an earthing up plate and a ridging plate to carry out ridging of a required height. Fertilizer application operation is simultaneously performed with the ridging operation. A fertilizer is applied from a fertilizer nozzle to an interrow spacing and the part of the applied fertilizer is covered with soil while being ridged to the side of crops together with soil plowed in the intertillage with the colter. Interrow residual soil is then subjected to action by the earthing up plate and ridging plate, earthed up and covered so as to further increase the height of the part covered with the fertilizer. Thereby, plant foot parts can be simultaneously ridged at a required height.

Ultimately it is reasonable to assume known:
a) in the field of precision pneumatic seeders also mono-germ, equipped with fertilizer burying devices, the arrangement of devices for the burying of the fertilizer, which are fixed in such a way as to follow the movement of the drive wheels of the tractor or dragging means, rather than that of the devices burying the seed, causing in such a way, a not optimal depth burying of such fertilizer, resulting in expenditure of such;
b) a joint floating type precision seeder which is provided with a machine body large frame, a fertilizer sowing opener, a seed guide opener and a joint floater. The joint floater is provided with a quadrilateral floating twisting frame, the head of the quadrilateral floating twisting frame is fixedly connected with the machine body large frame through a welded large frame clamping base and a U-shaped bolt, a fertilizer sowing opener installation base and a connecting rod are installed at the tail of the quadrilateral floating twisting frame in welding mode, a seed guide opener installation base is installed at the tail end of the connecting rod in welding mode, the fertilizer sowing opener is installed on the fertilizer sowing opener installation base through rod legs of the fertilizer sowing opener, and the seed guide opener is installed on the seed guide opener installation base through rod legs of the seed guide opener. Compared with an existing similar product, due to joint stable floating of the fertilizer sowing opener and the seed guide opener, the joint floating type precision seeder has good adaptability to cultivated land surface status and simultaneously guarantees interval values of a sowed fertilizer layer and a sowed seed layer to be constant values (or fluctuate within a minimum range) so as to ensure optimal fertilizer and seed sowing effect;
c) a radar measurement and control precision seeder comprising a rack, wherein the rack is provided with a seed box and a fertilizer box; a precision seeding device is mounted below the seed box and a ditching fertilizer apparatus is mounted below the fertilizer box; an earth covering and pressing device is mounted behind the rack; the rack is further provided with a speed measurement radar, a controller, an adjustable proportion valve, a hydraulic motor and a seeding driving shaft, which are connected in sequence; and the seeding driving shaft is connected with the precision seeding device. According to the radar measurement and control precision seeder disclosed by the utility model, speed monitoring is carried out through the radar and the hydraulic motor is used for driving and seeding, so that the seeding amount can reach a pre-set requirement; and the radar measurement and control precision seeder has the characteristics of high automation degree, accurate regulation and control of the seeding amount and the like;
d) an utility model which relates to a large-ridge close planting straw clearing layered fertilization no-tillage precision seeding monomer and belongs to agricultural machinery. The monomer comprises a combined monomer machine frame, a connecting rod frame, a fertilizer box, a layered fertilizer applicator, a seed box, a seed furrow opener, a precision seeder, a land wheel, a disc soil covering device and a press roller, wherein the connecting rod frame, the fertilizer box, the layered fertilizer applicator, the seed box, the seed furrow opener, the precision seeder, the land wheel, the disc soil covering device and the press roller are assembled on the combined monomer machine frame, double-shaft rigid-tooth type straw clearing and straw covering assemblies are assembled on the lower part of the front side of the combined monomer machine frame and in a position positioned in front of the layered fertilizer applicator, and a universal transmission shaft is connected with the double-shaft rigid-tooth type straw clearing and straw covering assemblies through a chain transmission mechanism. The monomer has the advantages that the structure is reasonable, the operation quality is good, the operation efficiency is high, the operation is reliable, the application range is wide, the general-purpose degree is high, and the monomer particularly meets and adapts to the requirement of a large-ridge close planting maize stubble land no-tillage fertilization seeding agricultural operation method;
e) a load transfer device for seed and fertilizer distribution systems in seeders and fertilizers improving adaptation of seed distribution systems to the different ground irregularities, comprising a deformable parallelogram-shaped structure attached to such seeder and fertilizer machine tool-holder bar at one end and to the distribution system at the other end; a transfer rack that articulates in one of the parallelogram vertexes acting as a rocker arm connected at one end to the aforementioned parallelogram and at the other end to at least one spring through a lever arm; wherein such lever arm extends downwardly and divergently, generating a crossing angle between the parallelogram lower and upper sides, creating a torque that varies not only for the spring tension but also for the ratio of the lever arms effective lengths involved. The system is installed in seed and fertilizer distribution systems, to improve movement along the ground;
f) the application of a fertilizer at a desired position and obtain excellent fertilizer effects by carrying out ridging in a vegetational part through intertillage earthing up and simultaneously applying the fertilizer into a ridged part. Interrow soil of crops is subjected to intertillage earthing up action with intertillage by a colter and earthing up action by an earthing up plate and a ridging plate to carry out ridging of a required height. Fertilizer application operation is simultaneously performed with the ridging operation. A fertilizer is applied from a fertilizer nozzle to an interrow spacing and the part of the applied fertilizer is covered with soil while being ridged to the side of crops together with soil plowed in the intertillage with the colter. Interrow residual soil is then subjected to action by the earthing up plate and ridging plate, earthed up and covered so as to further increase the height of the part covered with the fertilizer. Thereby, plant foot parts can be simultaneously ridged at a required height.

### Drawbacks

From all of the invention and what of public domain, is highlighted thus that the devices, for a combined system of burying of seed and fertilizer, by means of a disc and by means of a falchion, still use traditional fertilizer burying devices, such as those integrally bound with the transversal support beam, which is integral to the drive wheels of the tractor or dragging means, or, systems dedicated solely to the burying of fertilizer, also mounted in a floating manner.

From the inventions it appears, thus, that it is becoming substantial in the field the recourse to solutions, sometimes ingenious, but not exhaustive, economic and ergonomic, because they still does not have the objective of using the principles of union and combination of the mounting of devices for the burying of the seed and fertilizer, in such a way that both said burying devices, be mounted in a floating manner, with respect to the drive wheels of the tractor or dragging means.

As for the burying of fertilizer in axis with the seed sowing or axially offset from it, in a device mounted in conjunction with a device burying the seed, both fixed one behind the other, on a floating frame and independent of the motion of the drive wheels of a tractor or dragging means, are not found similar combinations as proposed with the present invention. There are not found also accomplishments in the fields of prior art patents or in those of public domain. All of the inventions, in fact, relates to the use of devices of traditional burying of fertilizer, such as those fixed integrally to the transversal support beam, which is integral to the drive wheels of the tractor or dragging means, or, of separate devices, dedicated solely to the burying of fertilizer, mounted in a floating manner.

From all the above, there is therefore the need for companies, particularly in the sector, to identify alternative solutions, more effective, compared to the solutions up to now in existence. One purpose of the present invention is also to obviate the described drawbacks.

### Brief description of the invention

This and other objects are achieved with the present invention according to the characteristics of the included claims solving the mentioned problems through the development of a fertilizer burying system, by means of disc and of falchion, which are mounted on the floating frame of a seeding element, posteriorly together with the seed burying system, conventionally provided on a typical precision seeder. In the present case the said system provides for the fixing of at least one fertilizer burying device, by means of disc and of falchion, which, being fixed on the floating frame by parallelogram means, typical of a precision seeder, said burying device by means of disc and of falchion, allows the precision burying of the fertilizer, because, like the seeding element is independent from the movement of the tractor drive wheels or dragging means, not being bound firmly to the transversal support beam, which is integral to said wheels. Furthermore, said burying system can bury the fertilizer, in line of seeding with the seed or offset from it, for specific seeding.

### Purposes and advantages

In this way, through the considerable creative contribution whose effect has allowed to achieve a considerable technical progress, are achieved some purposes and advantages.

The first purpose of the present invention was to enable the realization of a fertilizer burying system, by means of disc and of falchion, which are mounted on the floating frame of a seeding element, posteriorly together with the seed burying system, conventionally provided on a typical precision seeder.

A second purpose was therefore to realize said fertilizer burying system, by means of a converging pair of discs, provided with a coil spring suspension which, can be quickly disposed in axis of seeding with the seed burying device or offset approximately 60 mm from it, for special seeding; discs between which is fixed a tube dispenser of fertilizer, in turn connected superiorly via a conventional hose, to the hopper of the said fertilizer.

A third purpose consisted in providing the said fertilizer burying system, by a pair of opposing falchions where a first falchion is fixed while a second one is provided with elastic movement by means of an adjustable coil spring to make it yielding to the unevenness of the ground and that, similarly to the burying discs, can be quickly disposed in axis of seeding with the seed burying device or offset approximately 60 mm from it, for special seeding, on which the second falchion, is fixed a tube dispenser of fertilizer, in turn connected superiorly via a conventional hose, to the hopper of the said fertilizer.

A fourth purpose in the realization of the realization of a fertilizer burying system, by means of disc and of falchion, which are mounted on the floating frame of a seeding element, posteriorly together with the seed burying system, conventionally provided on a typical precision seeder, has been to provide the attachment of said burying disc and falchion, on the part that supports the device burying the seed, by means of a removable plate, in such a way as to make said burying and falchion, quickly removable for maintenance and repair, even in the field of seeding.

These and other advantages will appear from the following detailed description of preferred embodiments with the aid of the enclosed schematic drawings, whose details of execution are not to be considered limitative but only illustrative.

### Drawings content

- Fig.1 is a 3D: view of the assembly of precision sower fitted with the fertilizer burying falchion device, mounted in a removable and offsettable manner on the same parallelogram frame of the seeder;
- Fig.2 is a 3D: view of the assembly of precision sower fitted with the fertilizer burying disc device, mounted in a removable and offsettable manner on the same parallelogram frame of the seeder;
- Fig.3 is a 3D: view of the assembly of the typical precision seeder;
- Fig.4 is a 3D: view of the assembly of front-to-rear (F - R) of the fertilizer burying falchion device, mounted in axis with the seed burying assembly;

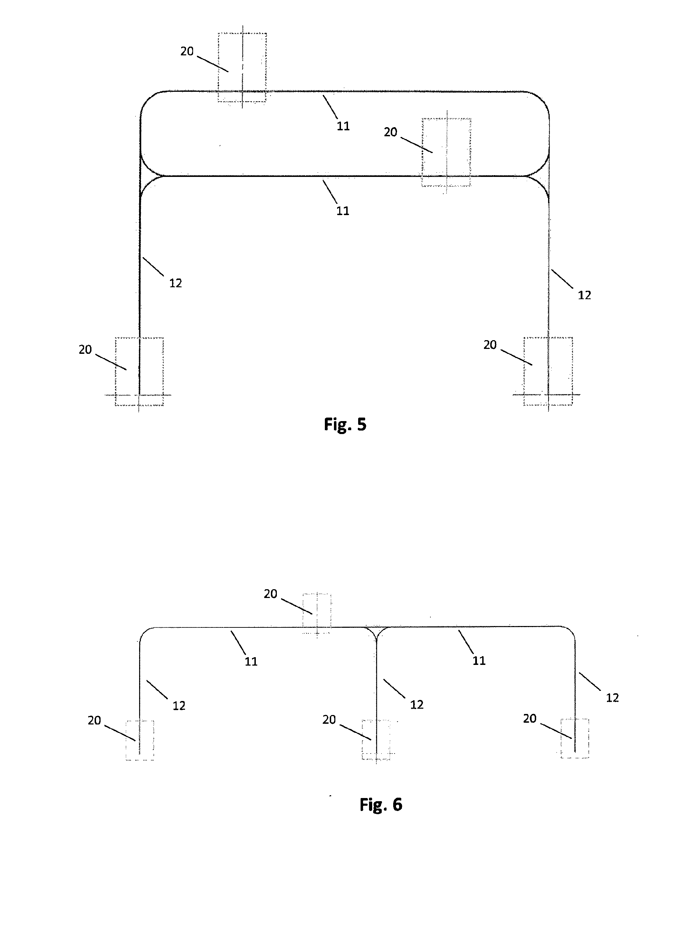

- Fig.5 is a 3D: view of the assembly front-to-rear (F - R) of the fertilizer burying falchion device, mounted offset of 60 mm (Q1) from the seed burying assembly;
- Fig.6 is a 3D: view of the assembly front-to-rear (F - R) of the fertilizer burying disc device, mounted in axis with the seed burying assembly;

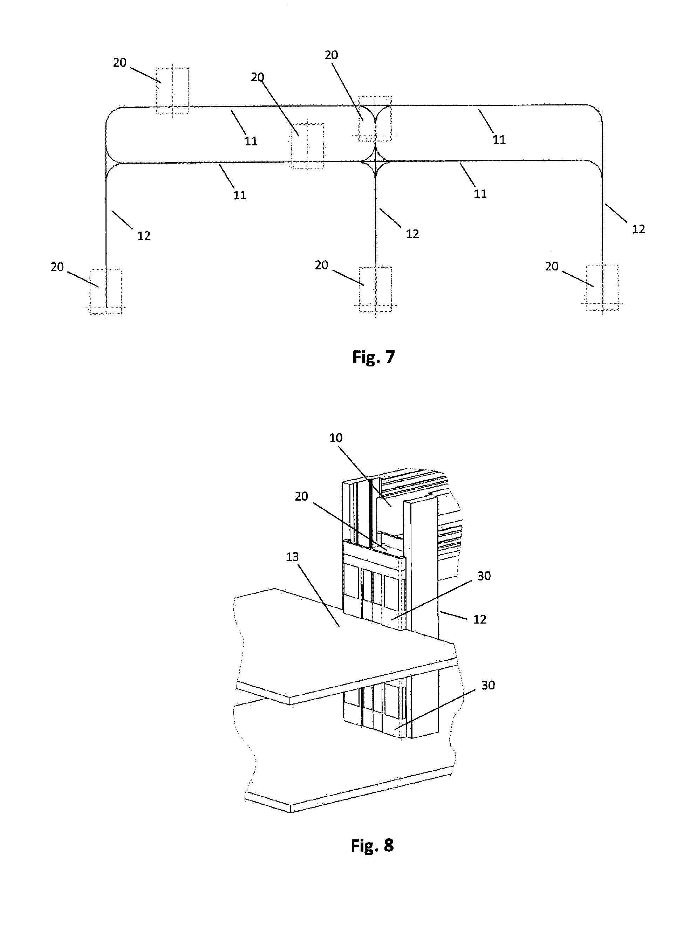

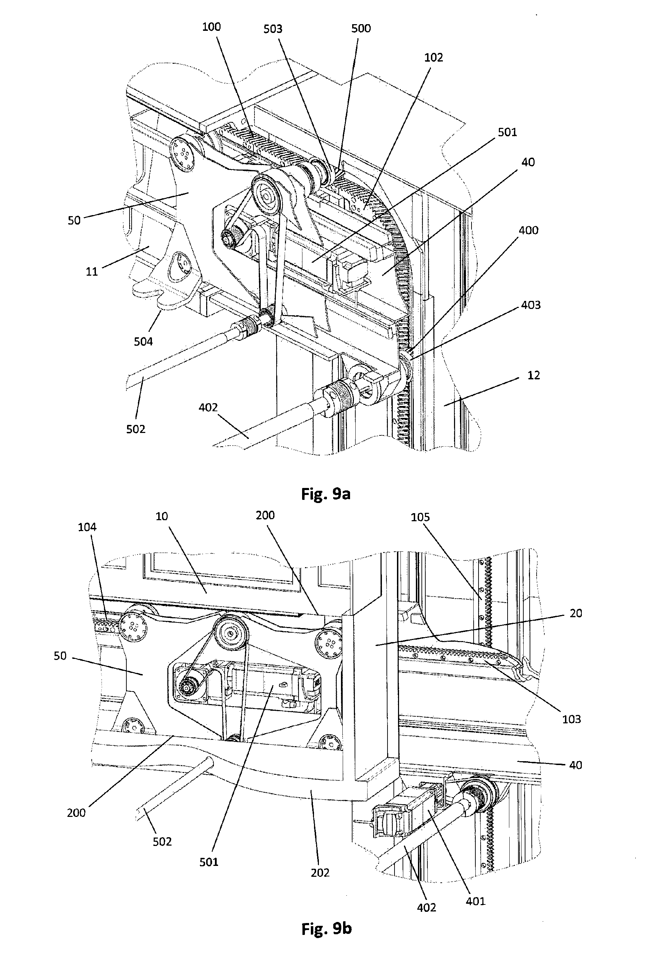

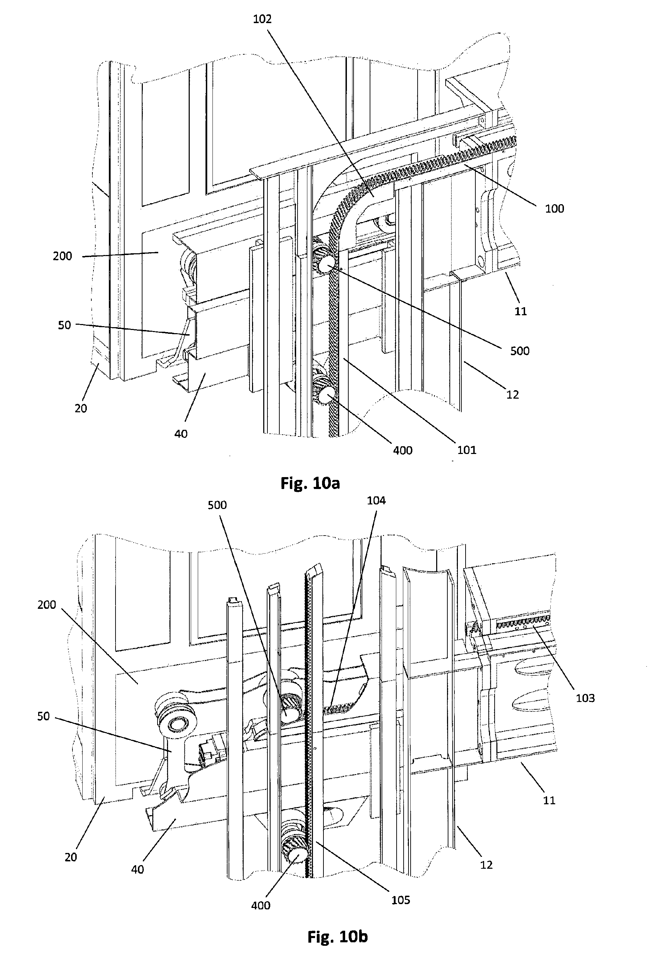

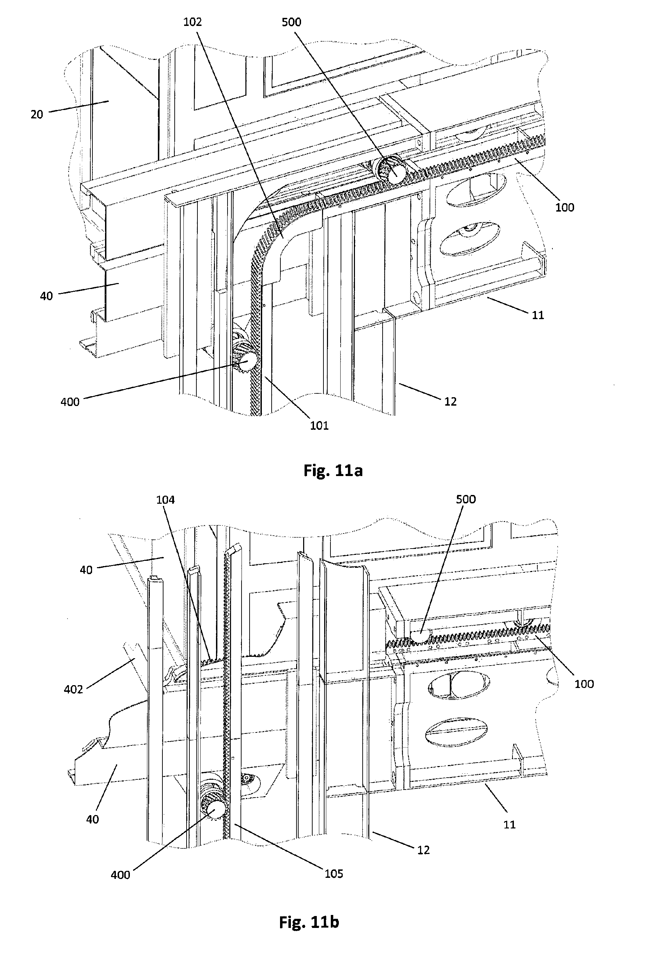

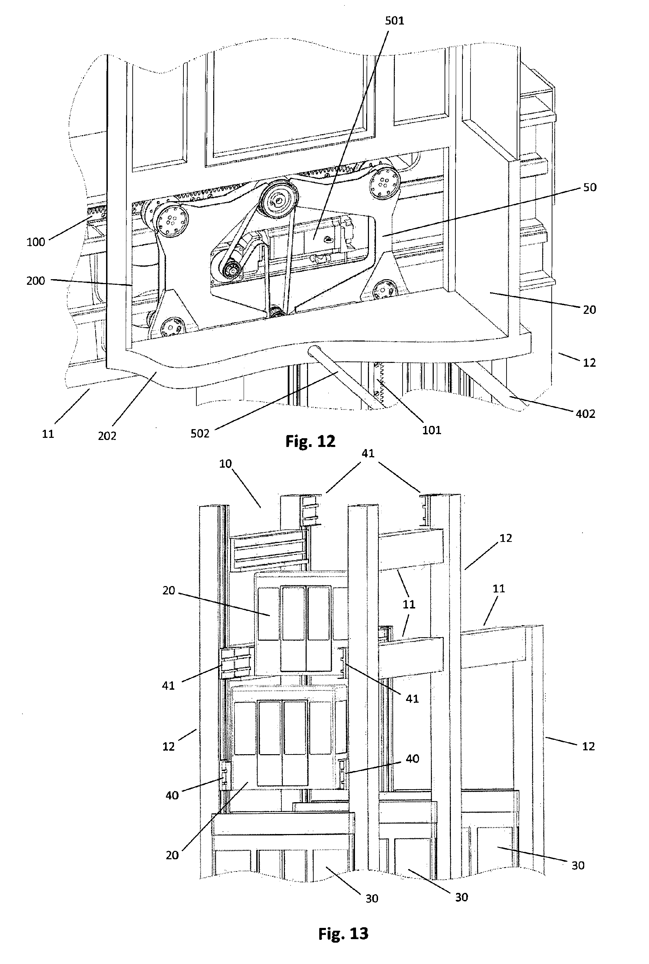

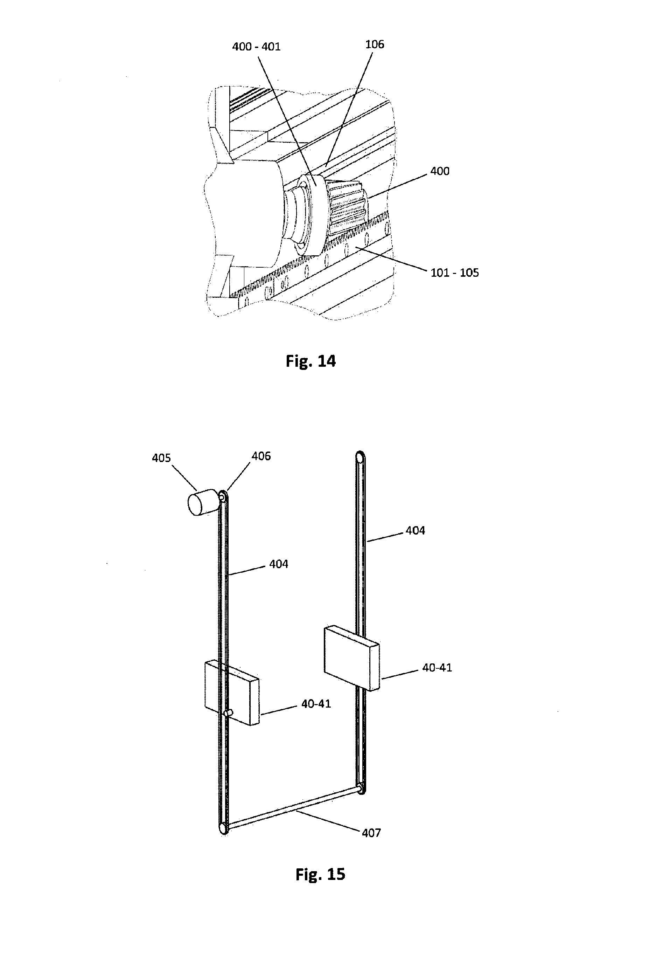

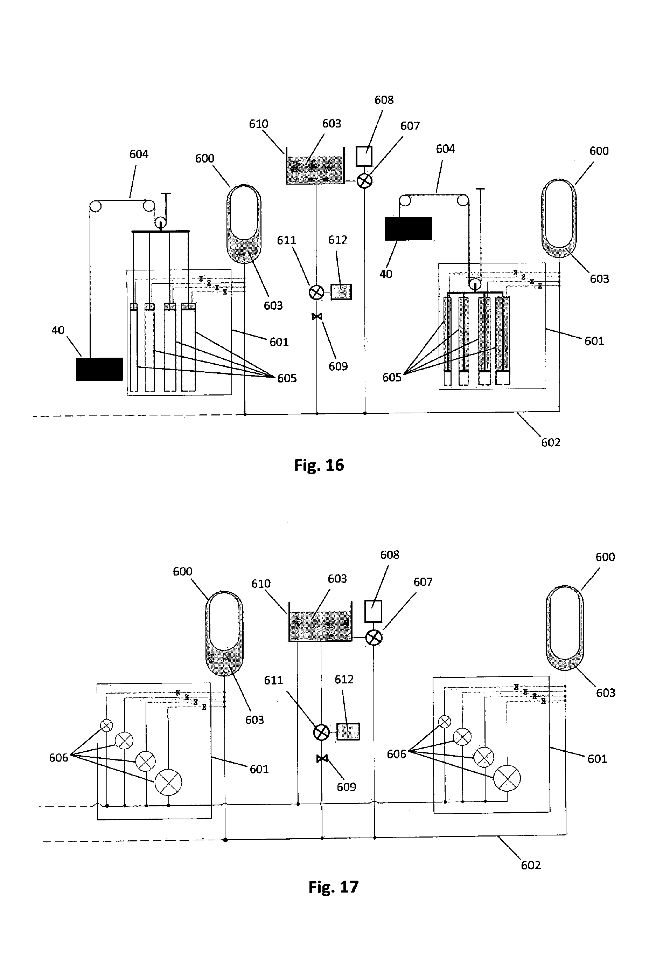

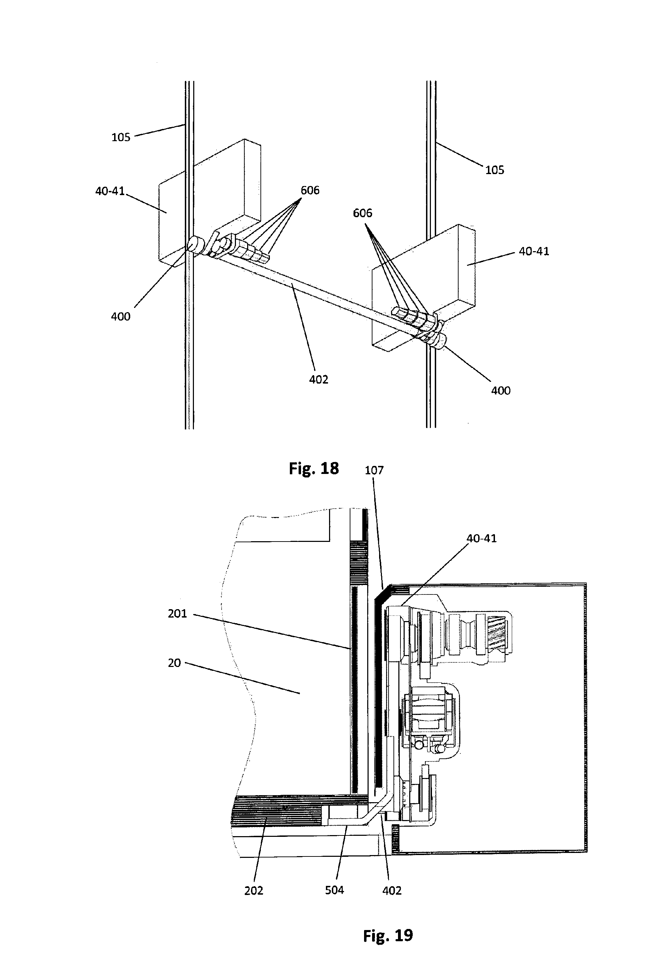

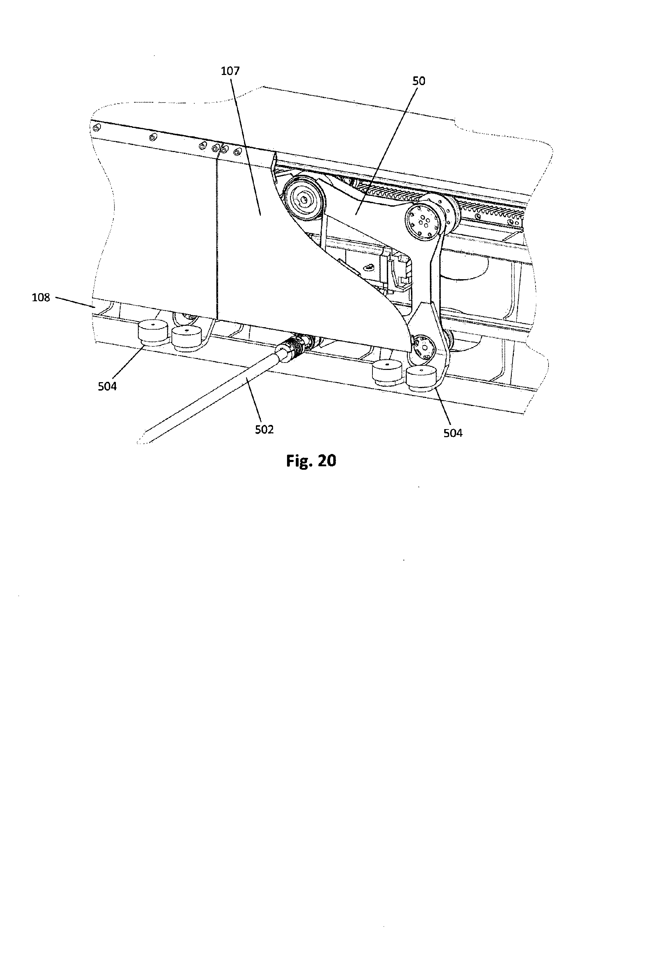

- Fig.7 is a 3D: view of the front-to-rear (F - R) of the fertilizer burying disc device, mounted offset of 60 mm (Q1) from the seed burying assembly;

La forma rappresentata dai disegni è puramente esemplificativa.

### Practical example of embodiment of the invention

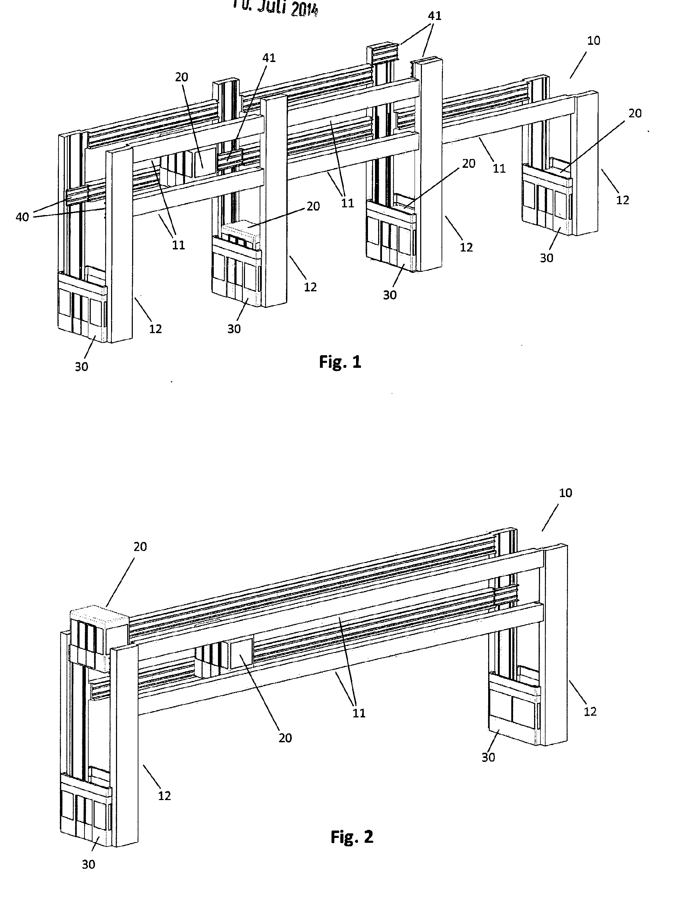

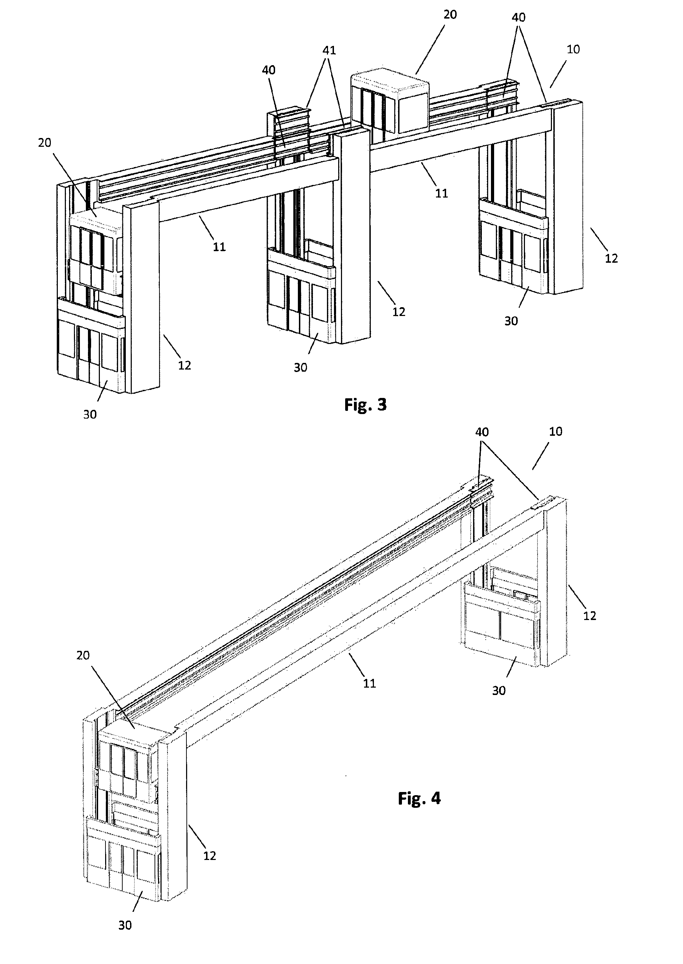

Fertilizer burying system, by means of fertilizer burying device disc (20) (Fig. 2) and by means of fertilizer burying device falchion (30) (Fig. 1), which are mounted in a removable manner alternately, by means of a support bracket (40), on the rear wall (51) of the parallelogram frame (50) floating elastically, which supports a seed burying device (60) fed from a seed hopper (61), usually provided on a precision seeder (10) (Fig. 3).

Fertilizer burying device disc (20) (Fig. 2), by means of a pair of converging discs (21, 22), rotating on the same bearing axis (23) attached to a support bar (24), provided with coil spring suspension (25), said support bar (24) being movable telescopically inside two rectangular tubes (26, 27) in turn attached integrally to a support bracket (28), attached in turn on the rear wall (51) of the parallelogram frame (50) floating elastically; said support bar (24) can be quickly assembled by inserting it in one or another of the said two rectangular tubes (26, 27), in such a manner as to be disposed in axis with the sowing of the seed burying device (60) or, offset about 60 mm from it, for special seeding, and where, between said convergent discs (21, 22) is attached a fertilizer dispenser tube (29), in turn connected superiorly via a conventional hose, to the fertilizer hopper (70), which can remain attached conventionally to the transverse bar (80) which is connected integrally to the tractor or dragging means.

Fertilizer burying device falchion (30), in the middle pair of opposing falchions (31, 32) where a first falchion (31) is fixed and is solidly attached to a support bracket (33), while a second falchion (32) solidly attached to a support bar (32'), is provided with an elastic movement system by means of a coil spring (34), adjustable by a tension means (35), to make it compliant with the unevenness of the ground and that, similarly to the fertilizer burying converging discs (21, 22), can be quickly disposed in axis with the sowing of the seed burying device (60) or offset about 60 mm from it, by means of a through bolt (36) through the said support bar (32') and provided of the relative locking nut (37) which allows the assembly of said second falchion (32) in a manner of axis of seeding or offset, thanks to a cylindrical segment of thickness (38), to allow special sowings, on which to the second falchion (32), is attached a tube dispenser of fertilizer (39), in turn connected superiorly via a conventional hose, to the fertilizer hopper (70), which can remain attached conventionally to the transverse bar (80), which is connected integrally to the tractor or dragging means.

Fertilizer burying system, by means of fertilizer burying device disc (20) (Fig. 2) and by means of fertilizer burying device falchion (30) (Fig. 1), which are mounted in a removable manner alternately, on the rear wall (51) of the parallelogram frame (50) floating elastically, posteriorly, together with the said system of seed burying device (60), conventionally provided on a typical precision seeder (10) (Fig. 3), where it is provided with the removable attachment of said fertilizer burying device disc (20) and of said fertilizer burying device falchion (30), by means of said support bracket (40), in such a way as to make such devices quickly removable for maintenance and repair, even in the field of sowing.

### References

10 typical precision seeder
20 fertilizer burying device disc
21, 22 converging discs
23 bearing axis
24 support bar
25 coil spring suspension
26 rectangular tube
26, 27 rectangular tubes
27 rectangular tube
28 support bracket
29 fertilizer dispenser tube
30 fertilizer burying device falchion
31, 32 pair of opposing falchions
31 first falchion
32 second falchion
32' support bar
33 support bracket
34 coil spring
35 tension means
36 through bolt
37 locking nut
38 cylindrical segment of thickness
39 fertilizer dispenser tube
40 support bracket
50 parallelogram frame
51 rear wall
60 seed burying device
61 seed hopper
70 fertilizer hopper
80 transverse bar

## Claims

1. System of fertilizer burying, by means of fertilizer burying device disc (20) and by means of fertilizer burying device falchion (30), provided with precision typical seeder (10), of the type apt to be engaged to the transverse bar (80 ), which is connected in a fixed manner to the tractor or dragging means, **characterized in that** the said devices of fertilizer burying device disc (20) and by means of fertilizer burying device falchion (30) are mounted in manner alternately removable, by means of a support bracket (40), on the rear wall (51) of the parallelogram frame (50) floating elastically, which supports a seed burying device (60) fed by a seed hopper (61).

2. System of fertilizer burying, according to claim 1, **characterized in that** said fertilizer burying device disc (20) removable by means of a support bracket (40) is provided with a pair of converging discs (21, 22), rotating on the same load-bearing axis (23) fixed to a support bar (24), provided with a suspension coil spring (25) to make it yielding to the unevenness of the ground, said support bar (24) being movable telescopically, alternately inside two rectangular tubes (26, 27) in turn rigidly fixed to a support bracket (28); said support bracket (28) being engageable to the first rectangular tube (26) or to the second rectangular tube (27) of the said rectangular tubes (26, 27), in such a manner as to result disposed in axis of seeding with the seed burying device (60) or, offset from it by about 60 mm (Q1), for special seeding and, where, between the said converging discs (21, 22) is fixed a tube dispenser of fertilizer (29), in turn connected superiorly, by means of a flexible hose, to the hopper of the fertilizer (70) which, remains attached to the said transverse bar (80) that is connected in solidarity manner to the tractor or to the dragging means.

3. System of fertilizer burying, according to claim 1, **characterized in that** said fertilizer burying device falchion (30) removable, by means of a support bracket (40), includes a pair of opposed falchions (31, 32), wherein a first falchion (31) is fixed and is integrally fixed to a support bracket (33), while a second falchion (32), which is rigidly fixed to a support bar (32'), is provided with elastic handling system by means of an helical spring (34), adjustable by a tension means (35), to make it yielding to the unevenness of the ground and in which said second falchion (32) is engageable in axis of seeding with the seed burying device (60) or alternatively offset of approximately 60 mm from it (Q1), by means of a through bolt (36) through the said support bar (32') and provided of relative locking nut (37) which allows to the said second falchion (32) to be positioned in axis of seeding or alternatively offset, thanks to a cylindrical segment of thickness (38); and in which to the said second falchion (32), is fixed a tube dispenser of fertilizer (39), in turn connected superiorly, by a flexible hose, to the hopper of the fertilizer (70), which remains attached to the transverse bar (80) connected in a fixed manner to the tractor or to the dragging means.
